# EUROPÄISCHE PATENTSCHRIFT

(11) **EP 2 540 542 B1**
(45) Veröffentlichungstag und Bekanntmachung des Hinweises auf die Patenterteilung: **19.04.2017**
(21) Anmeldenummer: 12000747.1
(22) Anmeldetag: 04.02.2012
(51) Int. Cl.: B60J 5/04

(54) **Türsystem für ein Kraftfahrzeug**
Door system for a motor vehicle
Système de porte pour un véhicule automobile

(30) Priorität: 28.06.2011 DE 102011105902
(43) Veröffentlichungstag der Anmeldung: 02.01.2013
(73) Patentinhaber: MAN Truck & Bus AG, 80995 München (DE)
(72) Erfinder: Elsner, Thomas, 83278 Traunstein (DE)
(74) Vertreter: v. Bezold & Partner Patentanwälte - PartG mbB

(56) Entgegenhaltungen:
- DE-U1- 9 113 848
- DE-U1-202007 008 782
- US-A1- 2005 121 939

## Beschreibung

Die Erfindung bezieht sich auf ein Türsystem gemäß Oberbegriff des Anspruchs 1.

Aus der DE202007008782U ist eine ein- oder mehrflügelige Fahrgasttür für ein Fahrzeug des öffentlichen Personenverkehrs bekannt, wobei jeder Türflügel eine an der bezüglich des Fahrgastraums liegenden Außenseite des Türflügels angeordnete Glasscheibe aufweist, die zur Halterung ausschließlich über eine auf einer bezüglich des Fahrgastraums liegenden Innenseite der Glasscheibe angeordnete Trägervorrichtung mit dem Fahrzeug verbindbar ist. Zum Stand der Technik kann ferner die US2005121939A genannt werden.

Es ist bekannt, dass Omnibusse unterschiedlicher Nutzung wie z.B. Stadtbusse, Linienbusse, Überlandbusse, Reisebusse, etc. Türen mit unterschiedlicher Durchgangsbreite, Durchgangshöhe und Designgestaltung aufweisen. Ferner ist bekannt, dass Türrahmen von Omnibussen üblicherweise aus gekrümmten Seitenträgern ausgebildet sind und Türen (z.B. deren Außenhäute, Scheiben, etc.) mit einer komplementären Fallung versehen sind, was zu einer aufwendigen Montage und Justage (z.B. mechanische Einstellung der Türblätter, Schließkeile und Antriebe, pneumatische Einstellung des Zylinders und elektrisches Anlernen im Bordnetz) führt. Außerdem ist die Herstellung der meist dreidimensional gekrümmten Seitenträger und der dazu erforderlichen Schweißgebilde kompliziert. Ebenso kann der Türlauf durch große Toleranzen und sich fortsetzende Winkelfehler fehlerbehaftet sein. Darüber hinaus ist es nicht zwingend erforderlich, dass die Fallung der Tür und die Fallung der Außenhaut des Omnibusses identisch sind, was zu einem ungünstigen Verschließen und zu Windgeräuschen führen kann oder zum Türreversieren oder Vorbeilaufen der Schließkeile.

Eine Aufgabe der Erfindung ist es, ein alternatives und/oder verbessertes Türsystem für ein Kraftfahrzeug zu schaffen.

Diese Aufgabe kann insbesondere mit den Merkmalen des unabhängigen Anspruchs gelöst werden.

Gemäß der Erfindung wird ein Türsystem für ein Kraftfahrzeug, vorzugsweise Nutzfahrzeug, insbesondere Omnibus geschaffen. Das Türsystem umfasst einen Türrahmen, der vorzugsweise parallel verlaufende Seitenträger und zumindest einen die Seitenträger verbindenden Querträger aufweist. Die Seitenträger und der Querträger bilden den Türrahmen planar aus, erstrecken sich somit insbesondere entlang und/oder in einer planaren Ebene.

Der Türrahmen dient vorzugsweise als Tragstruktur für eine Kraftfahrzeugtüre zum Öffnen und Schließen einer Kraftfahrzeugöffnung.

Der planare Türrahmen führt vorteilhaft zu einer einfachen Montage und Einstellung, ermöglicht einfache Schweißungen und Dichtungen, ein gutes Dichtverhalten und bietet ferner dennoch gestalterische Möglichkeiten der Außenhaut der Kraftfahrzeugtüre. Außerdem ist vorteilhaft, dass für Türrahmen unterschiedlicher Größe/Designgestaltung einheitliche Profile (z.B. Strangpressprofile, Meterware), ein einheitliches Dichtsystem und einheitliche Schnittstellen verwendet werden können, z.B. zwischen den den Türrahmen ausbildenden Trägern, aber auch zwischen dem Türrahmen und einer oder mehreren der unten näher erläuterten Komponenten, insbesondere dem Portalrahmen, dem Antriebssystem, dem Geripperahmen des Kraftfahrzeugs, etc.. Ferner ist von Vorteil, dass aufgrund der planaren Ausbildung und der vorzugsweise ausschließlich rechtwinkligen Ausrichtung der Längsträger relativ zu dem Querträger der Türrahmen ohne statische Überbestimmtheit ausgeführt werden kann. Außerdem sind vorteilhaft Skaleneffekte erzielbar, durch höhere Stückzahlen über eine Vielzahl von unterschiedlichen Kraftfahrzeugreihen.

Das Türsystem weist einen Portalrahmen auf, der planar ausgeführt ist. Ähnlich wie der Türrahmen kann der Portalrahmen Seitenträger und einen die Seitenträger verbindenden Querträger aufweisen. Die Seitenträger und der Querträger können den Portalrahmen vorzugsweise komplementär zu dem Türrahmen planar ausbilden, erstrecken sich somit insbesondere entlang und/oder in einer planaren Ebene.

Der Portalrahmen dient vorzugsweise zur Einfassung der Kraftfahrzeugöffnung und/oder zur festen Montage an dem Kraftfahrzeug.

Zweckmäßig ist der Türrahmen relativ zu dem Portalrahmen beweglich, z.B. verschwenkbar oder versetzbar, insbesondere, wenn der Portalrahmen oder allgemein das Türsystem an dem Kraftfahrzeug montiert ist.

Das Türsystem kann ferner ein Antriebssystem zum Bewegen, insbesondere Verschwenken oder Versetzen des Türrahmens aufweisen, wodurch zweckmäßig die Kraftfahrzeugöffnung mittels der Kraftfahrzeugtüre geöffnet und geschlossen werden kann. Das Antriebssystem ist vorzugsweise mit dem Türrahmen und dem Portalrahmen verbunden und weist vorzugsweise eine Befestigungsstruktur auf, um an dem Kraftfahrzeug befestigt zu werden.

Es ist möglich, dass der Türrahmen, der Portalrahmen und optional das Antriebssystem eine insbesondere vormontierte Modul-/Baukasteneinheit ausbilden, die vormontiert an dem Kraftfahrzeug, z.B. einem Geripperahmen des Kraftfahrzeugs, montierbar ist.

Außerdem kann das Türsystem vorzugsweise zwei separate Dichtelemente zum Dichten zwischen dem Türrahmen und dem Portalrahmen aufweisen.

Es ist möglich, dass eines der Dichtelemente relativ zu dem anderen der Dichtelemente bewegbar ist. Vorzugsweise ist eines der Dichtelemente an dem Portalrahmen befestigt, z.B. um frei gegen den Türrahmen zu dichten. Vorzugsweise ist das andere der Dichtelemente an dem Türrahmen befestigt, z.B. um frei gegen den Portalrahmen zu dichten. Insbesondere ist eines der Dichtelemente an dem Türrahmen befestigt und zusammen mit dem Türrahmen bewegbar und ein anderes der Dichtelemente ist an dem Portalrahmen befestigt und verbleibt an dem Portalrahmen, wenn der Türrahmen bewegt wird.

Es ist möglich, dass die Dichtelemente sich parallel zueinander erstrecken und/oder benachbart zueinander angeordnet sind, z.B. wenn die Kraftfahrzeugtüre die Kraftfahrzeugöffnung schließt und/oder in dem nachstehend beschriebenen ersten Zustand, in dem der Portalrahmen oder allgemein das Türsystem noch nicht an dem Kraftfahrzeug montiert ist.

Das Türsystem weist zumindest ein Sicherungselement auf, das in einem ersten Zustand, in dem der Portalrahmen noch nicht an dem Kraftfahrzeug befestigt ist oder allgemein das Türsystem noch nicht an dem Kraftfahrzeug montiert ist, eine ungewollte Bewegung (z.B. ein Verschwenken oder Versetzen) des Türrahmens relativ zu dem Portalrahmen verhindert und so vorteilhaft eine Transport- oder Lagesicherung für den Türrahmen schafft.

Das Sicherungselement lässt in einem zweiten Zustand eine Bewegung (z.B. ein Verschwenken oder Versetzen) des Türrahmens relativ zu dem Portalrahmen zu und dient dazu, den Portalrahmen an dem Kraftfahrzeug zu befestigen. Der zweite Zustand ist insbesondere ein Zustand, in dem der Portalrahmen an dem Kraftfahrzeug befestigt oder allgemein das Türsystem an dem Kraftfahrzeug montiert ist.

Das Sicherungselement dient also einerseits als Transport- oder Lagesicherung für den Türrahmen und andererseits dazu, den Portalrahmen an dem Kraftfahrzeug zu befestigen. Vorzugsweise erstreckt sich das Sicherungselement im ersten Zustand aus dem Türrahmen in den Portalrahmen hinein, um so eine Bewegung des Türrahmens relativ zu dem Portalrahmen zu verhindern, und ist vorzugsweise im zweiten Zustand von dem Türrahmen gelöst, um so eine Bewegung des Türrahmens relativ zu dem Portalrahmen zuzulassen.

Der Türrahmen, insbesondere zumindest einer seiner Seitenträger und/oder sein Querträger kann z.B. eine Zugangsöffnung aufweisen, über die das Sicherungselement mittels eines Werkzeugs betätigbar ist.

Das Sicherungselement ist vorzugsweise eine Schraube, kann aber auch als anderer geeigneter Sicherungsmechanismus ausgeführt werden. Der Portalrahmen kann z.B. eine Einziehmutter umfassen, so dass bei Betätigung der Schraube sich die Schraube von dem Türrahmen befreit und in einen Geripperahmen des Kraftfahrzeugs bewegt wird.

Es ist möglich, dass der Portalrahmen zur Aufnahme des Türrahmens dient, insbesondere der Türrahmen innerhalb des Portalrahmens positioniert ist, wenn die Kraftfahrzeugtüre die Kraftfahrzeugöffnung schließt und/oder der Portalrahmen oder allgemein das Türsystem noch nicht an dem Kraftfahrzeug montiert ist.

Vorzugsweise sind ein Außenhautelement und optional weitere übliche Komponenten an dem Türrahmen angebracht, um zweckmäßig die Kraftfahrzeugtüre auszubilden, wobei das Außenhautelement eine Fallung aufweisen kann oder zumindest im Wesentlichen fallungsfrei ausführbar ist.

Der Portalrahmen ist insbesondere ausgebildet, um an dem Kraftfahrzeug, insbesondere einem Geripperahmen des Kraftfahrzeugs stationär oder unbeweglich befestigt zu werden, während der Türrahmen zweckmäßig relativ zu dem Portalrahmen bewegbar ist, insbesondere verschwenkbar oder versetzbar, wenn der Portalrahmen an dem Kraftfahrzeug befestigt oder allgemein das Türsystem an dem Kraftfahrzeug montiert ist.

Zu erwähnen ist noch, dass der Türrahmen (z.B. die Seitenträger und/oder der Querträger des Türrahmens) und/oder der Portalrahmen (insbesondere die Seitenträger und/oder der Querträger des Portalrahmens) vorzugsweise aus Hohlprofilen ausgebildet ist.

Die Erfindung bezieht sich auch auf ein Kraftfahrzeug, vorzugsweise Nutzfahrzeug, insbesondere Omnibus mit einem wie hierin beschriebenes Türsystem aufweist.

Das Kraftfahrzeug kann z.B. einen vorzugsweise planaren Geripperahmen aufweisen, der den Portalrahmen aufnimmt und/oder an dem der Portalrahmen befestigt ist.

Zu erwähnen ist, dass das Kraftfahrzeug vorzugsweise ein Nutzfahrzeug (z.B. Lastkraftwagen, Baumaschine, Kehrmaschine, Lieferfahrzeug, Spezialfahrzeug, etc.) ist, insbesondere ein Omnibus.

Obige erfindungsgemäßen Merkmale und Ausführungsformen sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine perspektivische Ansicht eines Türsystems gemäß einer Ausführungsform der Erfindung,
- Figur 2: zeigt eine isometrische Ansicht des Türsystems nach Figur 1,
- Figur 3: zeigt eine Seitenansicht des Türsystems nach den Figuren 1 und 2,
- Figur 4: zeigt einen Querschnitt entlang Linie A-A aus Figur 3,
- Figur 5: zeigt ein Türsystem gemäß einer Ausführungsform der Erfindung, das noch nicht an ein Kraftfahrzeug montiert ist,
- Figur 6: zeigt das Türsystem nach Figur 5, das an dem Kraftfahrzeug montiert ist,
- Figur 7: zeigt einen Querschnitt eines Türsystems mit einem Außenhautelement gemäß einer Ausführungsform der Erfindung, und
- Figur 8: zeigt einen Querschnitt des Türsystems nach Figur 7, jedoch mit einem anderen Außenhautelement.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung einer oder mehrerer anderer Ausführungsformen verwiesen wird, um Wiederholungen zu vermeiden.

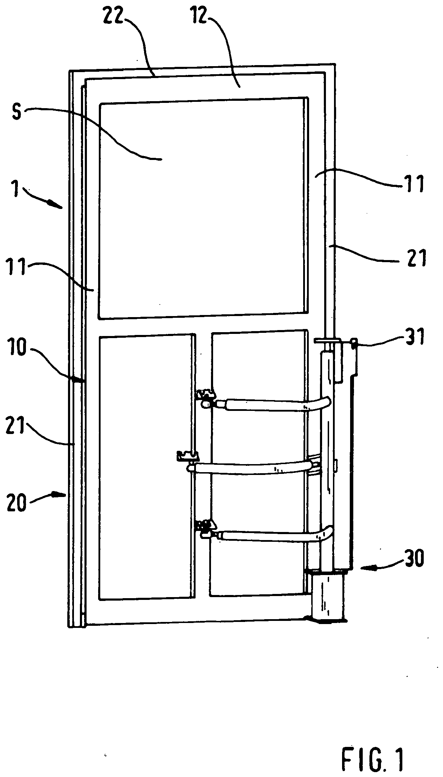

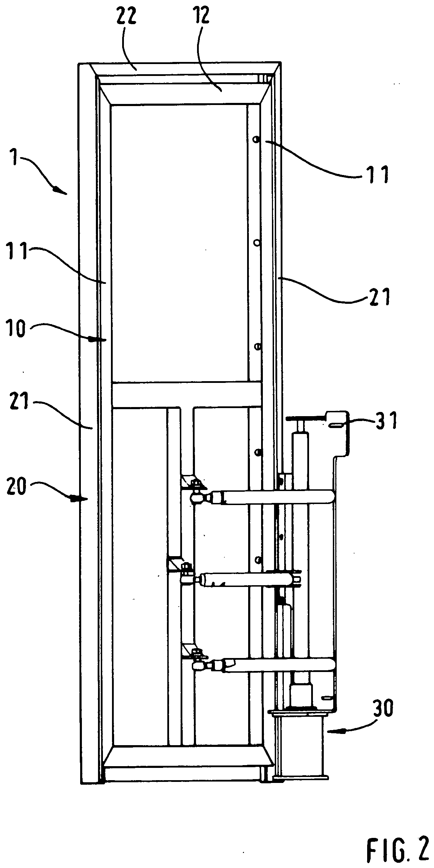

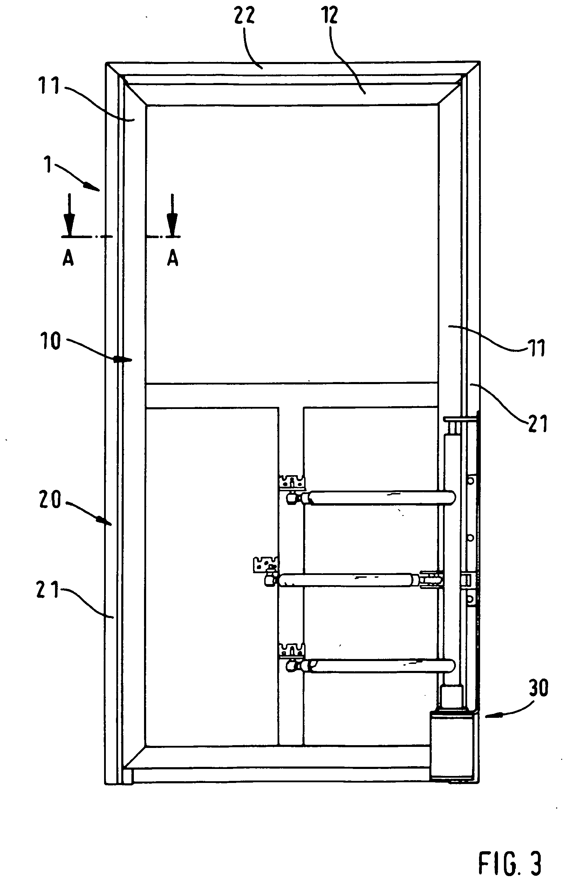

Figur 1 zeigt eine perspektivische Ansicht eines Türsystems 1 für ein Kraftfahrzeug in Form eines Omnibusses gemäß einer Ausführungsform der Erfindung, während die Figur 2 eine isometrische Ansicht des Türsystems 1 und Figur 3 eine Seitenansicht des Türsystems 1 zeigen. Unter Bezugnahme auf die Figuren 1 bis 3 umfasst das Türsystem 1 einen Türrahmen 10, der als Tragstruktur für eine Omnibustüre zum Öffnen und Schließen einer Omnibustüröffnung dient. Der Türrahmen 10 umfasst zwei Seitenträger 11 und einen die Seitenträger 11 verbindenden Querträger 12. Die Seitenträger 11 und der Querträger 12 erstrecken sich in einer planaren Ebene, wodurch folglich der Türrahmen 10 planar ausgebildet wird. An den Türrahmen 10 ist ein Außenhautelement z.B. in Form einer Scheibe S angebracht.

Außerdem umfasst das Türsystem 1 einen Portalrahmen 20, der komplementär zu dem Türrahmen 10 ausgebildet ist und der zwei Seitenträger 21 und einen die Seitenträger 21 verbindenden Querträger 22 aufweist. Die Seitenträger 21 und der Querträger 22 erstrecken sich in einer planaren Ebene, wodurch folglich der Portalrahmen 20 planar ausgebildet wird. Der Portalrahmen 20 dient zur Einfassung der Omnibustüröffnung und zur festen Montage an dem Omnibus. Der Türrahmen 10 ist relativ zu dem Portalrahmen 20 versetzbar oder verschwenkbar, wenn der das Türsystem 1 an dem Omnibus montiert ist.

Ferner umfasst das Türsystem 1 ein Antriebssystem 30 zum Bewegen (z.B. Versetzen oder Verschwenken) des Türrahmens 10, wodurch die Omnibustüröffnung durch die Omnibustüre geöffnet und geschlossen werden kann und über das der Türrahmen 10 mit dem Portalrahmen 20 verbunden ist. Das Antriebssystem 30 weist eine Befestigungsstruktur 31 auf, um an dem Omnibus befestigt zu werden.

Der Türrahmen 10, der Portalrahmen 20 und das Antriebssystem 30 bilden eine Moduleinheit, die vormontiert an dem Omnibus, insbesondere einem Geripperahmen des Omnibusses befestigbar ist.

Die Figuren 1 bis 3 zeigen das Türsystem 1 in einem Zustand vor Montage an den Omnibus und/oder in einem Zustand zum Schließen einer nicht gezeigten Omnibustüröffnung.

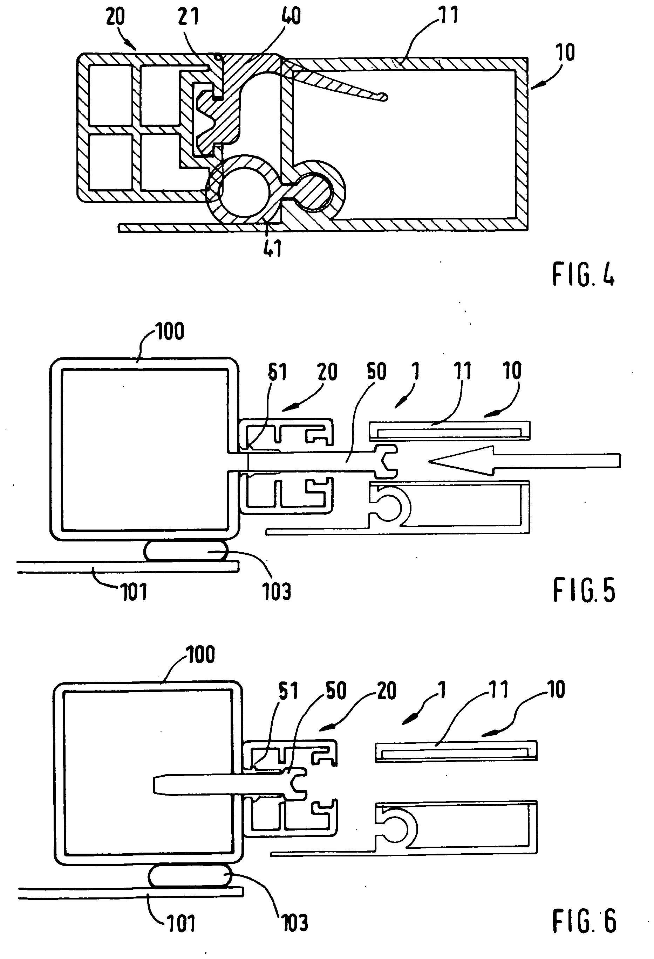

Figur 4 zeigt einen Querschnitt entlang Linie A-A aus Figur 3. Zwischen dem Türrahmen 10 und dem Portalrahmen 20 sind zwei separate Dichtelemente 40, 41 zum Dichten zwischen dem Türrahmen 10 und dem Portalrahmen 20 angeordnet. Das Dichtelement 41 ist an dem Türrahmen 10 fixiert und zusammen mit dem Türrahmen 10 bewegbar, z.B. wenn die Omnibustüre geöffnet wird, und das Dichtelement 40 ist an dem Portalrahmen 20 fixiert und verbleibt an dem Portalrahmen 20, wenn der Türrahmen 10 bewegt wird. Das Dichtelement 41 ist somit relativ zu dem Dichtelemente 40 versetzbar.

Figur 5 zeigt ein Türsystem 1, das z.B. wie unter Bezugnahme auf die Figuren 1 bis 4 beschrieben wurde, ausgeführt sein kann. Das Türsystem 1 umfasst mehrere Sicherungselemente 50, wovon eines in der Figur 5 zu sehen ist. Figur 5 zeigt das Sicherungselement 50 in einem ersten Zustand, in dem der Portalrahmen 20 oder allgemein das Türsystem 1 noch nicht an dem Omnibus montiert ist. In dem ersten Zustand verhindert das Sicherungselement 50 ein ungewolltes Versetzen oder Verschwenken des Türrahmens 10 relativ zu dem Portalrahmen 20 und schafft somit eine Transport- oder Lagesicherung.

Figur 6 zeigt das Sicherungselement gemäß Figur 5 in einem zweiten Zustand. In dem zweiten Zustand ist der Portalrahmen 20 oder allgemein das Türsystem 1 an dem Omnibus montiert und somit in einem Betriebszustand. In dem zweiten Zustand lässt das Sicherungselement 50 ein Versetzen oder Verschwenken des Türrahmens 10 relativ zu dem Portalrahmen 20 zu und dient dazu, den Portalrahmen 20 oder allgemein das Türsystem 1 an dem Omnibus, insbesondere einem Geripperahmen 100 des Omnibusses zu befestigen. Der Seitenträger 11 weist eine Zugangsöffnung auf, über die das Sicherungselement 50 mittels eines Werkzeugs betätigbar ist, was schematisch durch den Pfeil in Figur 5 angedeutet ist. Das Sicherungselement 50 ist als Schraube ausgebildet. Der Portalrahmen 20 umfasst eine Einziehmutter 51, so dass bei Betätigung der Schraube 50 sich die Schraube 50 von dem Türrahmen 10 befreit und in Geripperahmen 100 bewegt wird.

Wie in den Figuren 5 und 6 zu sehen ist, wird das Sicherungselement 50 und somit der Portalrahmen 20 oder allgemein das Türsystem 1 an dem Geripperahmen 100 des Omnibusses befestigt. Wie sich außerdem aus den Figuren 5 und 6 ergibt, erstreckt sich das Sicherungselement 50 im ersten Zustand aus dem Türrahmen 10 in den Portalrahmen 20 hinein und ist im zweiten Zustand von dem Türrahmen 10 gelöst. Bezugszeichen 101 kennzeichnet eine Fensterscheibe des Omnibusses, die mittels eines Verbindungselements 103 (z.B. eine Klebenaht, Scheibenverklebung, etc.) mit dem Geripperahmen 100 verbunden ist.

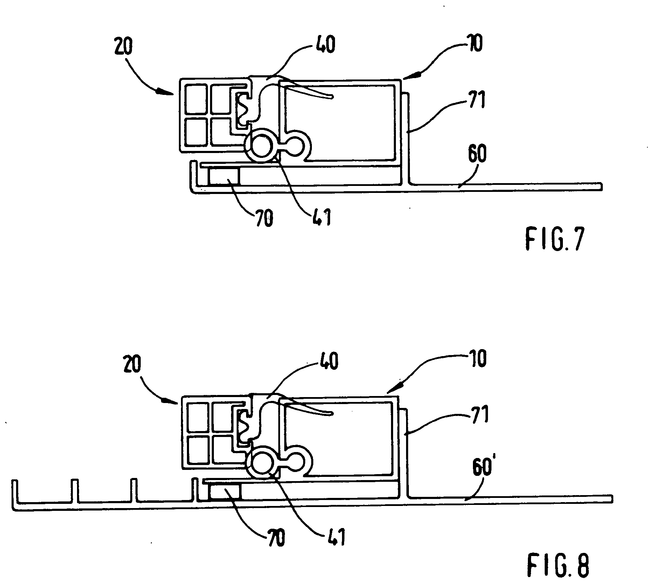

Figur 7 zeigt einen Querschnitt durch ein Türsystem mit einem Außenhautelement 60, das z.B. mittels eines Dämpfungselements 70 (z.B. Schaumstoff) und/oder eines Kopplungselements 71 mit dem Türrahmen 10 verbunden ist. Das Außenhautelement 60 ist schmal ausgebildet und kann eine Fallung aufweisen oder fallungsfrei sein.

Figur 8 zeigt ein identisches Türsystem wie Figur 7, jedoch mit einem anderen Außenhautelement 60' (z.B. unterschiedlich hoch, unterschiedlich breit, unterschiedliche Designgestaltung, etc.). Das Außenhautelement 60' der Figur 8 ist insbesondere deutlich breiter als das Außenhautelement 60 der Figur 7 und dennoch kann ein identisches Türsystem verwendet werden. Folglich kann das Außenhautelement 60' identisch zu der Figur 7 mittels eines Dämpfungselements 70 und/oder eines Kopplungselements 71 mit dem Türrahmen 10 verbunden werden und somit kann trotz unterschiedlicher Außenhautelemente 60, 60' eine identische Montage und Justierung erfolgen.

## Patentansprüche

1. Türsystem für ein Kraftfahrzeug, vorzugsweise Nutzfahrzeug, insbesondere Omnibus, mit:
- einem Türrahmen (10), der als Tragstruktur für eine Kraftfahrzeugtüre zum Öffnen und Schließen einer Kraftfahrzeugöffnung dient, wobei der Türrahmen (10) Seitenträger (11) und zumindest einen die Seitenträger (11) verbindenden Querträger (12) aufweist,
wobei
- der Türrahmen (10) planar ausgebildet ist, und
- das Türsystem einen planaren Portalrahmen (20) umfasst, der zur Einfassung der Kraftfahrzeugöffnung dient und zur Montage an dem Kraftfahrzeug ausgebildet ist, und der Türrahmen (10) relativ zu dem Portalrahmen (20) beweglich ist, wenn der Portalrahmen (20) an dem Kraftfahrzeug montiert ist, **gekennzeichnet durch** zumindest ein Sicherungselement (50), das in einem ersten Zustand, in dem der Portalrahmen (20) nicht an dem Kraftfahrzeug montiert ist, ein Bewegen des Türrahmens (10) relativ zu dem Portalrahmen (20) verhindert, und das in einem zweiten Zustand ein Bewegen des Türrahmens (10) relativ zu dem Portalrahmen (20) zulässt und dazu dient, den Portalrahmen (20) an dem Kraftfahrzeug zu befestigen.

2. Türsystem nach Anspruch 1, **gekennzeichnet durch** ein Antriebssystem (30), über das der Türrahmen (10) mit dem Portalrahmen (20) verbunden ist und das zum Bewegen des Türrahmens (10) relativ zu dem Portalrahmen (20) dient und das vorzugsweise eine Befestigungsstruktur (31) aufweist, um an dem Kraftfahrzeug befestigt zu werden.

3. Türsystem nach Anspruch 1 oder 2, **dadurch gekennzeichnet, dass** der Türrahmen (10), der Portalrahmen (20) und vorzugsweise das Antriebssystem (30) eine Moduleinheit ausbilden, die vormontiert an dem Kraftfahrzeug montierbar ist.

4. Türsystem nach einem der Ansprüche 1 bis 3, **gekennzeichnet durch** zwei separate Dichtelemente (40, 41) zum Dichten zwischen dem Türrahmen (10) und dem Portalrahmen (20), wobei vorzugsweise eines der Dichtelemente (40) an dem Portalrahmen (20) befestigt ist und das andere der Dichtelemente (41) an dem Türrahmen (10) befestigt ist.

5. Türsystem nach Anspruch 4, **dadurch gekennzeichnet, dass** eines der Dichtelemente (41) an dem Türrahmen (10) befestigt und zusammen mit dem Türrahmen (10) bewegbar ist und das andere der Dichtelemente (40) an dem Portalrahmen (20) befestigt ist und an dem Portalrahmen (20) verbleibt, wenn der Türrahmen (10) bewegt wird.

6. Türsystem nach Anspruch 4 oder 5, **dadurch gekennzeichnet, dass** die Dichtelemente (40, 41) sich parallel zueinander erstrecken und/oder benachbart zueinander angeordnet sind, wenn die Kraftfahrzeugtüre die Kraftfahrzeugöffnung schließt.

7. Türsystem nach einem der vorhergehenden Ansprüche, **dadurch gekennzeichnet, dass** das Sicherungselement (50) sich im ersten Zustand aus dem Türrahmen (10) in den Portalrahmen (20) hinein erstreckt und im zweiten Zustand von dem Türrahmen (10) gelöst ist und sich aus dem Portalrahmen (20) erstreckt, um an dem Kraftfahrzeug befestigt zu werden.

8. Türsystem nach einem der vorhergehenden Ansprüche, **dadurch gekennzeichnet, dass** zumindest ein Seitenträger (11) und/oder der Querträger (12) des Türrahmens (10) eine Zugangsöffnung aufweist, über die das Sicherungselement (50) mittels eines Werkzeugs betätigbar ist.

9. Türsystem nach einem der vorhergehenden Ansprüche, **dadurch gekennzeichnet, dass** der Portalrahmen (20) zur Aufnahme des Türrahmens (10) dient, wenn die Kraftfahrzeugtüre die Kraftfahrzeugöffnung schließt und/oder in einem Zustand, in dem das Türsystem noch nicht an dem Kraftfahrzeug montiert ist.

10. Kraftfahrzeug, vorzugsweise Nutzfahrzeug, insbesondere Omnibus, **gekennzeichnet durch** ein Türsystem nach einem der vorhergehenden Ansprüche.

11. Kraftfahrzeug nach Anspruch 10, **gekennzeichnet durch** einen planaren Geripperahmen (100), an dem der Portalrahmen (20) befestigt ist und der vorzugsweise den Portalrahmen (20) aufnimmt.

## Claims

1. Door system for a motor vehicle, preferably a commercial vehicle, in particular a bus/coach, with:
- a door frame (10) which serves as a supporting structure for a motor vehicle door for opening and closing a motor vehicle opening, wherein the door frame (10) has side supports (11) and at least one transverse support (12) connecting the side supports (11),
wherein
- the door frame (10) is of planar design, and
- the door system comprises a planar portal frame (20) which serves to surround the motor vehicle opening and is designed for installation on the motor vehicle, and the door frame (10) is movable relative to the portal frame (20) when the portal frame (20) is mounted on the motor vehicle, **characterized by** at least one securing element (50) which, in a first state, in which the portal frame (20) is not mounted on the motor vehicle, prevents movement of the door frame (10) relative to the portal frame (20) and which, in a second state, permits movement of the door frame (10) relative to the portal frame (20) and serves to fasten the portal frame (20) to the motor vehicle.

2. Door system according to Claim 1, **characterized by** a drive system (30) via which the door frame (10) is connected to the portal frame (20) and which serves to move the door frame (10) relative to the portal frame (20) and which preferably has a fastening structure (31) in order to be fastened to the motor vehicle.

3. Door system according to Claim 1 or 2, **characterized in that** the door frame (10), the portal frame (20) and preferably the drive system (30) form a modular unit which can be mounted in preassembled form on the motor vehicle.

4. Door system according to one of Claims 1 to 3, **characterized by** two separate sealing elements (40, 41) for sealing between the door frame (10) and the portal frame (20), wherein, preferably, one of the sealing elements (40) is fastened to the portal frame (20) and the other of the sealing elements (41) is fastened to the door frame (10).

5. Door system according to Claim 4, **characterized in that** one of the sealing elements (41) is fastened to the door frame (10) and is movable together with the door frame (10) and the other of the sealing elements (40) is fastened to the portal frame (20) and remains on the portal frame (20) when the door frame (10) is moved.

6. Door system according to Claim 4 or 5, **characterized in that** the sealing elements (40, 41) extend parallel to each other and/or are arranged adjacent to each other when the motor vehicle door closes the motor vehicle opening.

7. Door system according to one of the preceding claims, **characterized in that**, in the first state, the securing element (50) extends out of the door frame (10) into the portal frame (20) and, in the second state, is released from the door frame (10) and extends out of the portal frame (20) in order to be fastened to the motor vehicle.

8. Door system according to one of the preceding claims, **characterized in that** at least one side support (11) and/or the transverse support (12) of the door frame (10) has an access opening via which the securing element (50) can be actuated by means of a tool.

9. Door system according to one of the preceding claims, **characterized in that** the portal frame (20) serves to receive the door frame (10) when the motor vehicle door closes the motor vehicle opening and/or in a state in which the door system is not yet mounted on the motor vehicle.

10. Motor vehicle, preferably a commercial vehicle, in particular a bus/coach, **characterized by** a door system according to one of the preceding claims.

11. Motor vehicle according to Claim 10, **characterized by** a planar framework frame (100) to which the portal frame (20) is fastened and which preferably receives the portal frame (20).

## Revendications

1. Système de porte pour un véhicule automobile, de préférence un véhicule utilitaire, notamment un omnibus, avec :
- un cadre de porte (10) servant de structure portante pour une porte de véhicule automobile, pour l'ouverture et la fermeture d'une ouverture de véhicule automobile, le cadre de porte (10) comportant des supports latéraux (11) et au moins un support transversal (12) reliant les supports latéraux (11) ;
- le cadre de porte (10) étant réalisé de façon plane ; et
- le système de porte comprenant un cadre de portique (20) plan servant à border l'ouverture de véhicule automobile et réalisé pour être monté au véhicule automobile et le cadre de porte (10) étant mobile par rapport au cadre de portique (20) lorsque le cadre de portique (20) est monté au véhicule automobile ; **caractérisé par** au moins un élément de sécurisation (50) qui, dans un premier état dans lequel le cadre de portique (20) n'est pas monté au véhicule automobile, entrave un déplacement du cadre de porte (10) par rapport au cadre de portique (20) et qui, dans un deuxième état, permet un déplacement du cadre de porte (10) par rapport au cadre de portique (20) et sert à fixer le cadre de portique (20) au véhicule automobile.

2. Système de porte selon la revendication 1, **caractérisé par** un système d'entraînement (30) via lequel le cadre de porte (10) est relié au cadre de portique (20) et servant au déplacement du cadre de porte (10) par rapport au cadre de portique (20) et comportant de préférence une structure de fixation (31) pour la fixation au véhicule automobile.

3. Système de porte selon la revendication 1 ou 2, **caractérisé en ce que** le cadre de porte (10), le cadre de portique (20) et de préférence le système d'entraînement (30) forment une unité modulaire pouvant être prémontée au véhicule automobile.

4. Système de porte selon l'une quelconque des revendications 1 à 3, **caractérisé par** deux éléments d'étanchéité (40, 41) séparés servant à l'étanchéité entre le cadre de porte (10) et le cadre de portique (20), de préférence un des éléments d'étanchéité (40) étant fixé au cadre de portique (20) et l'autre élément d'étanchéité (41) étant fixé au cadre de porte (10).

5. Système de porte selon la revendication 4, **caractérisé en ce qu'**un des éléments d'étanchéité (41) est fixé au cadre de porte (10) et peut être déplacé conjointement avec le cadre de porte (10) et l'autre élément d'étanchéité (40) est fixé au cadre de portique (20) et reste au niveau du cadre de portique (20) lorsque le cadre de porte (10) est déplacé.

6. Système de porte selon la revendication 4 ou 5, **caractérisé en ce que** les éléments d'étanchéité (40, 41) s'étendent parallèlement l'un par rapport à l'autre et/ou sont disposés à côté l'un de l'autre lorsque la porte de véhicule automobile ferme l'ouverture de véhicule automobile.

7. Système de porte selon l'une quelconque des revendications précédentes, **caractérisé en ce que** l'élément de sécurisation (50) s'étend, dans le premier état hors du cadre de porte (10), jusque dans le cadre de portique (20) et est détaché, dans le deuxième état, du cadre de porte (10) et s'étend hors du cadre de portique (20) pour la fixation au véhicule automobile.

8. Système de porte selon l'une quelconque des revendications précédentes, **caractérisé en ce qu'**au moins un support latéral (11) et/ou le support transversal (12) du cadre de porte (10) comporte une ouverture d'accès via laquelle l'élément de sécurisation (50) peut être actionné à l'aide d'un outil.

9. Système de porte selon l'une quelconque des revendications précédentes, **caractérisé en ce que** le cadre de portique (20) sert à loger le cadre de porte (10) lorsque la porte de véhicule automobile ferme l'ouverture de véhicule automobile et/ou dans un état dans lequel le système de porte n'est pas encore monté au véhicule automobile.

10. Véhicule automobile, de préférence véhicule utilitaire, notamment omnibus, **caractérisé par** un système de porte selon l'une quelconque des revendications précédentes.

11. Véhicule automobile selon la revendication 10, **caractérisé par** un cadre d'ossature (100) plan auquel le cadre de portique (20) est fixé et logeant de préférence le cadre de portique (20).
